## Europäisches Patentamt
## European Patent Office
## Office européen des brevets

(19)

(11) Numéro de publication: **0 204 637**
**B1**

(12) # FASCICULE DE BREVET EUROPÉEN

(45) Date de publication du fascicule du brevet:
08.03.89

(51) Int. Cl.⁴: **B 60 B 33/06,** B 25 H 1/04, A 61 G 7/08

(21) Numéro de dépôt: 86401200.0

(22) Date de dépôt: 04.06.86

(54) Etabli mobile à moyens de manoeuvre exclusivement mécaniques.

(30) Priorité: 05.06.85 FR 8508497

(43) Date de publication de la demande:
10.12.86 Bulletin 86/50

(45) Mention de la délivrance du brevet:
08.03.89 Bulletin 89/10

(84) Etats contractants désignés:
AT BE CH DE FR GB IT LI NL SE

(56) Documents cité:
DE-A-2 407 013
DE-A-3 139 820
DE-B-1 040 979
DE-B-1 109 090
DE-B-1 129 900
DE-U-7 316 775
FR-A-740 465
FR-A-949 315
FR-A-1 008 824
GB-A-752 398
US-A-1 459 930

(73) Titulaire: Parolai, Albert, Route de Criel, F-38500
Voiron (FR)
Titulaire: PAROLAI MEUBLES S.A., 9 avenue du
Grand Sablon, F-38700 La Tronche (FR)

(72) Inventeur: Parolai, Albert, Route de Criel, F-38500
Voiron (FR)

(74) Mandataire: Derambure, Christian, BUGNION
ASSOCIES 55, rue Boissonade, F-75014 Paris (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 204 637 B1

LIBER, STOCKHOLM 1989

## Description

La présente invention concerne un établi du type comportant des moyens escamotables permettant son déplacement et son soutien stable pendant le déplacement, et des moyens de manoeuvre des moyens escamotables de leur position active où ils autorisent le déplacement de l'établi, à leur position inactive où ils sont escamotés et ou l'établi repose de façon stable et quasiment inamovible sur ses pieds.

On connaît déjà de tels établis mobiles, dont les moyens de manoeuvre sont hydrauliques, c'est à dire comportent des éléments hydrauliques, comme une pompe hydraulique à bras, permettant de manoeuvrer les moyens escamotables qui sont généralement constitués de roues ou roulettes.

Ces établis présentent toutes les qualités mécaniques des établis fixes ordinaires lorsque les moyens escamotables sont escamotés et qu'ils reposent sur leurs pieds, et peuvent généralement être déplacés notamment en fonction de la place qu'il y a dans l'atelier, ou pour transporter une pièce, ou pour changer de poste de travail tout en ayant les outils et l'établi à proximité, ou pour d'autres utilisations.

Ces établis connus donnent entière satisfaction, cependant ils présentent deux sortes d'inconvénients, à savoir d'une part, l'emploi de tels éléments hydrauliques complexes pour de simples établis que l'on veut juste pouvoir déplacer plus aisément est inadéquat dans le sens où il est sophistiqué, et d'autre part, la cinématique employée dans ces établis connus fait que la manoeuvre de mise sur roues de l'établi engendre une translation horizontale intempestive de l'établi que l'utilisateur est obligé de contrarier. Ainsi, les établis mobiles hydrauliques connus sont sur-équipés ce qui les rend onéreux et peu compétitifs par rapport aux simples établis fixes. De plus, l'emploi de moyens hydrauliques, bien que redondant, ne permet pas une mise sur roues parfaite.

On connaît également des établis mobiles comportant des moyens de roulement freinés et non escamotables, mais ces établis s'ils sont parfaitement mobiles n'ont pas une stabilité suffisante et ne peuvent pas être utilisés avec sécurité dans l'industrie comme un véritable établi fixe.

On connaît par ailleurs de nombreux établis mobiles comportant des moyens de roulement escamotables, dont les moyens de manoeuvre sont mécaniques.

Ainsi, le brevet français FR-A-949 315 décrit une caisse à outils roulante dont les roues peuvent être escamotées grâce à un système de barres, leviers et biellettes. Ce dispositif a pour inconvénient que le levier de manoeuvre est bas, en position horizontale lorsque les roues sont escamotées. De ce fait, il ne fonctionne que lorsque la caisse est peu chargée, et les manoeuvres d'escamotage et de déploiement sont pénibles et relativement dangereuses. Un tel dispositif ne peut pas être utilisé dans l'industrie, et n'est destiné qu'au bricolage.

Le certificat d'utilité allemand DE-U-7 316 775 décrit un établi mobile à moyens de manoeuvre mécaniques à leviers, bielles..., dont une roue, solidaire du levier de manoeuvre, peut pivoter pour diriger l'établi. Le dispositif est également très pénible à manoeuvrer, et la roue pivotante et le levier de manoeuvre saillent de façon importante à l'extérieur, ce qui est dangereux pour l'utilisateur.

La demande de brevet allemand DE-A-3 139 820 décrit un dispositif de mise sur roulettes d'agrès de gymnastique, comportant un seul levier de manoeuvre pour les roulettes avant et arrière. Ce dispositif n'est pas applicable pour un établi mobile industriel qui est beaucoup plus lourd à soulever que des agrès de gymnastique. Le petit levier de manoeuvre n'offre pas une démultiplication suffisante et forme saillie du côté extérieur à hauteur des pieds de façon dangereuse.

Le brevet allemand DE-A-1 040 979 décrit un établi mobile dont les moyens de manoeuvre mécaniques sont extrêmement complexes comportent de nombreuses pièces en mouvement qui prennent une place considérable sous l'établi, et même à l'extérieur. Ces moyens de manoeuvre, à ils permettent de soulever facilement l'établi, sont extrêmement couteux à réaliser et gênent l'utilisateur lorsqu'il travaille sur l'établi.

La demande de brevet allemand DE-A-2 407 013 décrit un établi mobile manoeuvrable au pied par un dispositif complexe comportant une pédale munie d'un organe de verrouillage. Ce dispositif ne permet en pratique la mise sur roues que lorsque l'établi est faiblement chargé. De plus, les manoeuvres sont complexes et requièrent de l'utilisateur un savoir-faire important.

Le brevet américain US-A-1 459 930 décrit un établi mobile comportant des moyens de manoeuvre mécaniques à bielles et leviers. Ces moyens de manoeuvre sont relativement simples, mais ne permettent pas de soulever l'établi sur ses roues si celui-ci est trop chargé du fait que les efforts de l'utilisateur ne sont quasiment pas démultipliés. Un tel dispositif n'est pas en pratique utilisable dans l'industrie et est d'une grande fragilité.

Le brevet allemand DE-A-1 129 900 décrit un établi mobile à moyens de manoeuvre à leviers et bielles. Le levier de commande est actionné à la main, et a une grande longueur. La manoeuvre de cet établi demande à l'utilisateur des efforts importants et mal orientés, ce qui complique la manoeuvre, et exclut l'utilisation de l'établi de façon intensive dans l'industrie. Les moyens de manoeuvre sont de plus relativement complexes et coûteux.

Le brevet français FR-A-1 008 824 décrit un établi mobile à moyens de manoeuvre à leviers et bielles. Le levier de commande est actionné à la main. Ce dispositif n'est cependant pas d'une robustesse suffisante pour pouvoir être utilisé de façon intensive dans l'industrie et lorsque l'établi est fortement chargé. De plus, il ne démultiplie pas suffisamment les efforts de l'utilisateur, qui sont mal orientés.

Par ailleurs, le brevet allemand DE-A-1 109 090 et le brevet anglais GB-A-752 398 décrivent les dispositifs de transport de lourdes charges permettant d'incliner les charges de façon à les placer sur des roues, et qui comportent des moyens de manoeuvre actionnables à la main et au pied. Ces dispositifs ne sont pas applicables pour un établi mobile, puisqu'un tel établi ne doit pas être incliné. De plus, les positions de travail de ces dispositifs ne sont pas ergonomiques, et fatiguent considérablement le dos de l'utilisateur.

L'invention vise à remédier aux inconvénients précités des établis mobiles connus, et a pour objet un établi mobile de faible prix de revient, de faible encombrement à l'intérieur comme à l'extérieur de l'établi, l'encombrement extérieur étant plus faible en position escamotée des roues, et dont les manoeuvres sont simples, demandent un effort réduit de l'utilisateur, et pour lesquelles la position de l'utilisateur est parfaitement ergonomique. Un établi mobile selon l'invention doit pouvoir être déplacé rapidement, simplement, avec une grande maniabilité (en braquant sur place), même lorsqu'il supporte de lourdes charges (notamment jusqu'à 500 kg au moins), et ce de façon répétée. Un autre objet de l'invention est de fournir un établi mobile utilisable de façon intensive dans l'industrie, et qui donc, outre les propriétés ci-dessus mentionnées, est d'une grande robustesse et d'une grande fiabilité. L'établi selon l'invention doit être parfaitement stable en position escamotée comme en position déployée des moyens de déplacement.

Pour ce faire, l'invention propose un établi du type comportant une structure rigide et indéformable, des moyens escamotables solidaires de la structure et qui permettent le déplacement horizontalement et le soutien stable de l'établi pendant son déplacement, et des moyens de manoeuvre exclusivement mécaniques permettant de manoeuvrer les moyens escamotables dans le sens du déploiement, respectivement dans celui de l'escamotage, et de les mettre en position active, respectivement inactive, caractérisé en ce que les moyens mécaniques de manoeuvre comportent d'une part des moyens de commande supérieurs constitués d'un premier levier comportant un point de manoeuvre sur lequel l'utilisateur peut exercer un effort manuel, un point d'appui solidaire de la structure et un point d'action sur un second levier dont le point de manoeuvre coïncide donc avec ce point d'action du premier levier, dont le point d'appui est solidaire de la structure, et qui comporte au moins un point d'action associé aux moyens escamotables par l'intermédiaire de moyens de transmission, et d'autre part des moyens de commande inférieurs constitués d'au moins un levier associé rigidement au second levier des moyens de commande supérieurs par leur point d'action commun, et qui comporte un point de manoeuvre sur lequel l'utilisateur peut exercer un effort normalement avec un de ses pieds, et au moins un point d'action associé aux moyens escamotables par l'intermédiaire de moyens de transmission, de façon que l'utilisateur puisse doser les efforts à exercer sur chacun des moyens de commande.

Ainsi,, un établi selon l'invention comporte des moyens escamotables de déplacement lui procurant une mobilité parfaite lorsqu'ils sont déployés en position active, et ne nuisant pas à sa stabilité lorsqu'ils sont en position inactive, totalement escamotés. De plus, un établi selon l'invention ayant des moyens de manoeuvre exclusivement mécaniques, ne comporte pas d'éléments hydrauliques et/ou pneumatiques et/ou électriques... ni d'autres éléments onéreux et complexes. D'ailleurs, les éléments des moyens de manoeuvre d'un établi selon l'invention sont associés mécaniquement les uns aux autres et/ou à l'établi par des liaisons mécaniques simples notamment du type pivot ou du type surfacique ou linéique.

L'effort exercé par l'utilisateur sur les moyens de manoeuvre d'un établi selon l'invention se fait dans des conditions ergonomiques optimales, en position debout, le dos droit, seuls les muscles des jambes, des bras et des épaules étant notablement sollicités. De plus, l'effort reste relativement faible en intensité du fait de la grande démultiplication et de son partage entre les moyens de commande inférieurs et supérieurs. De plus, la cinématique des moyens de manoeuvre est telle que l'effort manuel sur les moyens de commande supérieurs est un effort de traction, au moins au début de chaque manoeuvre, tandis que l'effort avec le pied sur les moyens de commande inférieurs est un effort de poussée. Ces deux efforts sont donc exercés plus facilement, puisqu'en sens inverse l'un de l'autre, les moyens de commande inférieurs, respectivement supérieurs, servant d'appui à l'utilisateur pour l'effort manuel, respectivement avec le pied.

Dans un établi, selon l'invention, les moyens de manoeuvre et les moyens escamotables sont agencés de façon que le déploiement des moyens escamotables ou leur déploiement se fassent parfaitement en n'engendrant aucune translation horizontale de l'établi.

D'autres caractéristiques et avantages de l'invention apparaîtront a la lecture de la description suivante d'un de ses modes de réalisation préférentiels donnée à titre d'exemple non limitatif, faisant référence aux figures annexées dans lesquelles:

- La figure 1 est une vue schématique en élévation d'un établi selon l'invention illustrant la position des divers éléments lorsque les moyens escamotables sont en position inactive, l'établi reposant sur ses pieds.
- La figure 2 est une vue schématique en élévation d'un établi selon l'invention illustrant la position des divers éléments lorsque les moyens escamotables sont en position active, l'établi reposant sur ces moyens escamotables de déplacement.
- La figure 3 est une variante de la figure 2.
- La figure 4 est une vue en perspective d'un établi selon un mode de réalisation préférentiel de l'invention.
- La figure 5 est une vue en élévation de la figure 4, les moyens escamotables étant en position inactive.
- La figure 6 est une vue partielle en élévation de la figure 4, les moyens escamotables étant en position active.

Un établi 1 mobile comporte de façon connue en soi une structure 2 rigide et indéformable formant établi, des moyens 3 escamotables de déplacement et des moyens 4 de manoeuvre de ces moyens 3 escamotables.

La strucutre 2 de l'établi 1 comporte de façon connue en soi un châssis 5 ou assimilé, de forme globale rectangulaire, horizontale. Quatre pieds 6 verticaux sont associés rigidement au châssis 5 par ses quatre coins. Les quatres pieds 6 s'étendent verticalement vers le haut au dessus du châssis en formant des montants, et sont associés rigidement à une surface 7 de travail. La nature, la forme, les accessoires et les dimensions de la structure 2 n'ont pas d'importance dans le cadre de l'invention et sont adaptés à l'utilisation que l'on veut faire de l'établi 1 (métallurgie, mécanique, menuiserie...). En particulier l'établi 1 peut avantageusement comporter des tiroirs ou autres moyens de rangement non représentés.

Le châssis 5 étant de forme globalement rectangulaire, comporte deux grands côtés et deux petits côtés. La structure 2 a un encombrement globalement parallélépipèdique. Elle peut comporter également des flancs perpendiculaires au châssis 5 et à la surface 7 de travail, associés aux pieds 6.

L'établi 1 comporte de façon connue des moyens 3 escamotables de déplacement solidaires de la structure 2 et permettant le déplacement horizontalement et le soutien stable de cet établi 1 pendant son déplacement. Les moyens 3 étant escamotables, peuvent occuper principalement deux positions importantes: une position inactive où ils sont complètement escamotés et où l'établi 1 repose de façon stable et quasiment inamovible sur ses pieds 6, et une position active où ils sont totalement déployés et autorisent le déplacement de l'établi.

La position inactive des moyens 3 escamotables correspond généralement à la position de travail, c'est à dire à la position dans laquelle l'établi 1 fait fonction véritablement d'établi sur lequel l'utilisateur peut travailler. C'est en général la position normale de l'établi 1.

Dans cette position inactive, les moyens 3 escamotables ne remplissent aucune fonction et n'ont pas d'importance, si ce n'est qu'ils ne doivent pas gêner les mouvements et le travail de l'utilisateur. De plus, l'établi 1 reposant sur ses pieds 6, a toutes les qualités mécaniques de rigidité et de stabilité nécessaires à son utilisation normale.

La position active des moyens 5 escamotables est une position dans laquelle l'établi 1 peut être déplacé horizontalement, donc une position généralement inadaptée au travail sur cet établi. L'établi 1 ne repose plus sur ses pieds 6, mais sur les moyens 3 escamotables qui en assurent le soutien stable. Toutefois, les moyens 3 escamotables peuvent être dimensionnés de façon suffisamment importante et/ou comporter des moyens de freinage connus immobilisant temporairement l'établi 1 pour autoriser le travail sur l'établi 1 en position active des moyens 3 escamotables. Cependant, dans un mode de réalisation préférentiel de l'invention, l'établi 1 n'est pas adapté à son utilisation en tant qu'établi en position active des moyens 3 escamotables. On remarquera d'ailleurs que les manoeuvres d'escamotage et de déploiement des moyens 3 escamotables se font instantanément et aisément. Ainsi quand l'utilisateur voudra travailler sur l'établi 1, il lui sera aisé d'escamoter les moyens 3 pour passer dans la position inactive de ces moyens 3. Réciproquement, s'il veut déplacer l'établi pour une raison quelconque (manque de place, changement de poste de travail, transport d'outils ou de pièces...) il pourra également de façon aisée déployer les moyens 3 escamotables et déplacer l'établi 1.

C'est pourquoi, l'établi 1 comporte des moyens 4 de manoeuvre des moyens escamotables de leur position inactive à leur position active décrites ci-dessus ou réciproquement de leur position active à leur position inactive. Ainsi les moyens 4 de manoeuvre sont tantôt des moyens de déploiement, tantôt des moyens d'escamotage des moyens 3.

Selon l'invention, les moyens 4 de manoeuvre sont exclusivement mécaniques et constitués de bras de levier, bielles et/ou autres mécanismes dont la fonction est de transformer un effort relativement faible de l'utilisateur en un effort susceptible d'actionner les moyens 3 escamotables dans le sens du déploiement respectivement dans celui de l'escamotage de façon à autoriser la mise en position active respectivement inactive de ces moyens 3 escamotables.

Ainsi, les moyens 4 de manoeuvre ne comportent aucun dispositif hydraulique et/ou pneumatique, complexe, coûteux et susceptible de défaillir. Par contre, les moyens 4 de manoeuvre d'un établi 1 mobile selon l'invention sont simples à l'extrême dans leur fonctionnement.

Dans une forme de réalisation préférentielle de l'établi 1 représentée sur les figures, les différents éléments des moyens 4 de manoeuvre sont associés mécaniquement les uns aux autres et/ou à l'établi 1 par des liaisons mécaniques simples notamment du type pivot, ou du type surfacique.

Les moyens 4 de manoeuvre comportent des moyens mécaniques 8 de commande sur lesquels l'utilisateur peut exercer un effort. Selon l'invention, les moyens mécaniques 8 de commande sont constitués de moyens 8a de commande supérieurs sur lesquels l'utilisateur peut exercer un effort manuel c'est à dire avec une main, voire avec les deux, et des moyens mécaniques 8b de commande inférieurs sur lesquels l'utilisateur peut exercer un effort normalement avec un des pieds. Les moyens 4 de manoeuvre comportent également des moyens mécaniques 9 de transmission des efforts exercés par l'utilisateur des moyens 8 de commande aux moyens 3 escamotables. L'utilisateur peut exercer un effort soit sur les moyens 8a de commande supérieurs, soit sur les moyens 8b de commande inférieurs, soit de préférence sur les moyens 8a et 8b simultanément. C'est pourquoi les moyens 8a, 8b de commande supérieurs et inférieurs sont associés cinématiquement ensemble de façon que l'utilisateur puisse doser les efforts à exercer sur chacun de ces moyens 8a, 8b de commande, l'effort transmis aux moyens 3 escamotables étant fonction de chacun des efforts exercés sur les moyens 8a et 8b de commande supérieurs et inférieurs.

Les moyens 4 de manoeuvre sont agencés de telle façon qu'au moins au début de chaque manoeuvre de déploiement et/ou d'escamotage, l'effort manuel sur les moyens 8a de commande supérieurs est un effort de traction, tandis que l'effort avec le pied sur les moyen 8b de commande inférieurs est un effort de poussée, les moyens 8b de commande inférieurs - respectivement les moyens 8a de commande supérieurs - servant d'appuui à l'utilisateur pour exercer l'effort manuel, respectivement l'effort avec le pied. La cinématique des moyens 4 de manoeuvre décrite ci-après permet avantageusement de réaliser cette fonction essentielle des moyens 4 de manoeuvre.

L'effort à exercer sur les moyens 8 de commande dépend du poids de l'établi et de la charge qu'il supporte. Les moyens 4 de manoeuvre sont démultipliés et dimensionnés de façon appropriée pour autoriser la manoeuvre des moyens 3 escamotables dans les cas usuels d'utilisation et de chargement, jusqu'à la charge maximale que la structure 2 peut supporter. L'utilisateur pourra doser ses efforts sur les moyens 8a, 8b notamment en fonction de la charge de l'établi 1. Ainsi, si l'établi 1 n'est pas chargé, un effort uniquement manuel ou uniquement avec un pied sur les moyens 8a ou 8b pourra suffire pour manoeuvrer les moyens 3 escamotables. Par contre, si l'établi 1 est fortement chargé, l'utilisateur pourra exercer un effort à la fois manuel sur les moyens 8a et avec un pied sur les moyens 8b. L'effort résultant est ainsi plus important et permet de soulever de plus fortes charges pour la même démultiplication des moyens 4.

Les moyens 8a et 8b de commande inférieurs et supérieurs sont agencés de sorte que leurs mouvements lors des manoeuvres d'escamotage, respectivement de déploiement se font dans le même sens, les efforts exercés par l'utilisateur sur ces moyens 8a, 8b de commande pendant les manoeuvres étant également sensiblement de même sens. Ainsi par exemple dans le mode de réalisation représenté, l'utilisateur doit exercer des efforts vers le bas sur les moyens 8a, 8b de commande pour déployer les moyens 3 escamotables.

Les moyens 8a de commande supérieurs sont constitués d'au moins deux leviers 10a, 10b.

Un levier est classiquement défini par trois points: un point de manoeuvre, un point d'action et un point d'appui. En pratique, ces points ne sont pas matérialisés par des points, mais généralement par des axes de rotation, ou autres dispositifs appropriés. Cependant, dans les figures schématiques de la cinématique, vus de côté, ces points sont représentés comme des points, et c'est pourquoi on utilisera ce terme dans la suite de la description de façon non limitative par rapport à leurs modes de réalisation pratiques.

Le premier levier 10a des moyens 8a de commande comporte un point de manoeuvre 11a sur lequel l'utilisateur peut exercer un effort manuel, un point d'appui 12a solidaire de la structure 2 et un point d'action 13a qui coïncide en permanence avec le point de manoeuvre 11b du second levier 10b dont le point d'appui 12b est solidaire de la structure 2.

Le point d'action 13a du premier levier 10a est associé par une liaison du type pivot au point de manoeuvre 11b du second levier 10b. Ainsi les leviers 10a, 10b sont associés et articulés l'un à l'autre en série, le levier 10a manoeuvrant le levier 10b. Le premier levier 10a est avantageusement globalement situé au dessus du second levier 10b.

Un des points d'appui 12a, 12b notamment et de préférence le point d'appui 12a du premier levier 10a est associé au moins lors des manoeuvres d'escamotage et de déploiement, de façon mobile à la structure 2 notamment par une liaison de contact surfacique ou le long d'une ligne. Le levier correspondant, notamment et de préférence le premier levier 10a, prend appui sur une surface ou le long d'une ligne de la structure 2. Le contact surfacique ou linéique peut être rompu lorsque les moyens 4 de manoeuvre sont au repos, en particulier lorsque les moyens 3 escamotables sont en position inactive, et que l'on prévoit de pouvoir rabattre les moyens 8 de commande dans une position où leur encombrement est minimum autour de la structure 2, ceci afin de ne pas gêner l'utilisateur lorsqu'il travaille sur l'établi.

L'autre point d'appui 12a, 12b notamment et de préférence le point d'appui 12b du second levier 10b est avantageusement associé de façon immobile et solidarisé à la structure 2 par une liaison du type pivot. Les deux points d'appui 12a, 12b des leviers 10a, 10b associés en série ne sont préférentiellement pas tous les deux en contact surfacique ou linéique avec la structure 2, car il en résulterait que les moyens 8 de comnande ne seraient pas suffisamment maintenus. De même, les deux points d'appui 12a, 12b des leviers 10a, 10b, associés en série ne sont pas tous les deux solidarisés à la structure 2 par une liaison du type pivot, car dans ce cas, ces points d'appui 12a, 12b et le point de manoeuvre 11b, aussi point d'action 13a, seraient sommets d'un triangle indéformable empéchant tout mouvement des moyens 3 escamotables. C'est pourquoi un de ces points d'appui est associé de façon immobile, solidarisé à la structure 2 par une liaison du type pivot, et l'autre est en contact surfacique ou linéique avec la structure 2.

Dans le mode de réalisation représenté sur les figures, le point d'action 13a est situé entre le point de manoeuvre 11a et le point d'appui 12a du premier levier 10a. Le point d'appui 12b est situé entre le point d'action 13b et le point de manoeuvre 11b du second levier 10b correspondant au point d'action 13a du premier levier 10a.

Dans le mode de réalisation préférentiel de l'invention où le point d'appui 12a du premier levier 10a est associé de façon mobile par contact surfacique ou linéique à la structure 2, la structure 2 comporte avantageusement des moyens 14 de maintien immobile du point d'appui 12a, actionnés automatiquement lorsque ce point d'appui 12a et les moyens 4 de manoeuvre sont dans une position donnée par rapport à la structure 2, notamment celle correspondant à la position active et/ou celle correspondant à la position inactive des moyens 3 escamotables. De la sorte, les deux leviers 10a, 10b de commande supérieurs associés rigidement et de façon immobile à la structure 2 par leur point d'appui 12a, 12b et articulés l'un à l'autre constituent un ensemble indéformable rigide maintenant les moyens 3 escamotables en position active et/ou active en empéchant un escamotage et/ou un déploiement intempestif des moyens 3 escamotables, notamment sous l'effet du poids de l'établi 1 et de sa charge.

De tels moyens 14 de maintien peuvent être prévus pour la position inactive et pour la position inactive des moyens 3 Cependant, préférentiellement ces moyens 14 de maintien ne sont prévus que pour la position active des moyens 3.

Le point d'appui 12a du premier levier 10a de commande supérieur est associé à la structure 2 par contact mobile surfacique ou linéique avec une rampe 15 de guidage rigidement solidaire de la structure 2, ce point d'appui 12a pouvant se déplacer le long de cette rampe 15 au cours des manoeuvres d'escamotage et de déploiement. Cette rampe 15 peut être verticale ou inclinée d'environ 30 degrés par rapport à la verticale, c'est à dire par rapport aux pieds 6. On prévoit avantageusement de disposer un dispositif facilitant le déplacement du point 12a le long de la rampe 15, par exemple une roulette.

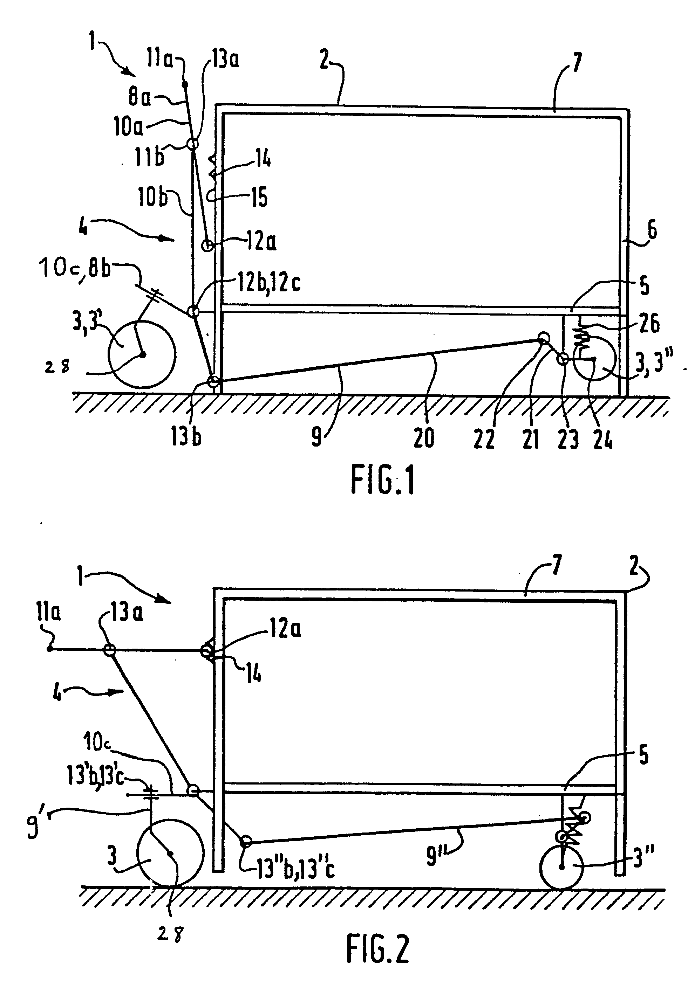

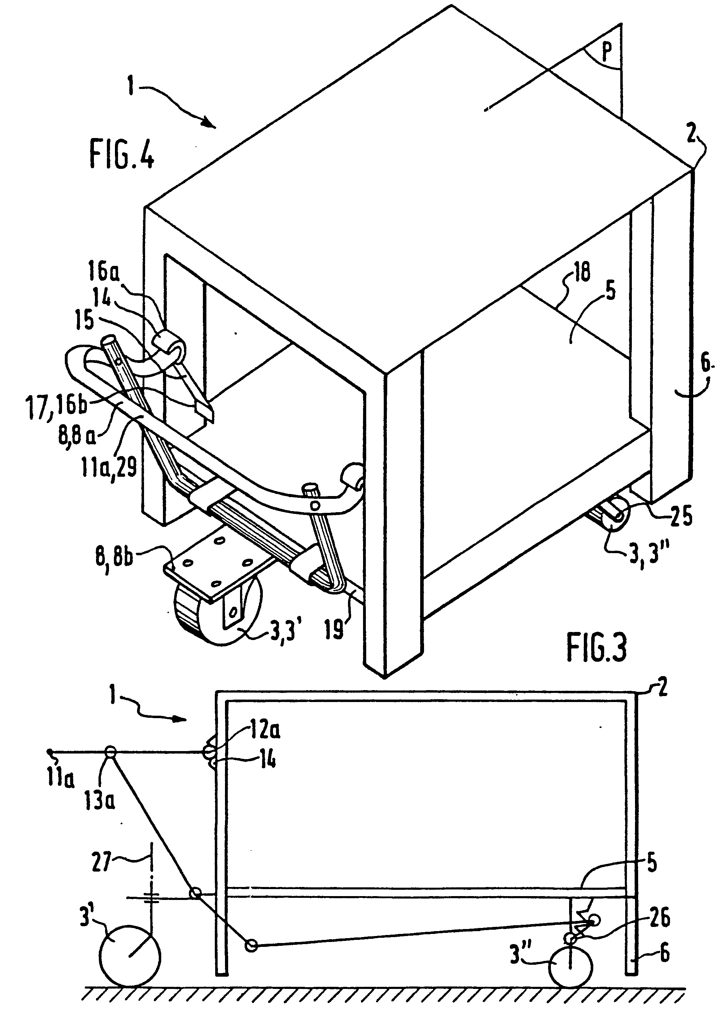

Lorsque ce point d'appui 12a se déplace le long de la rampe 15 de guidage, les moyens 4 de manoeuvre et les moyens 3 escamotables sont entraînés en mouvement, réalisant l'escamotage ou le déploiement des moyens 3 escamotables. Quand le point d'appui 12a est à une extrémité 16a de la rampe 15, les moyens 3 escamotables sont en position active comme cela est représenté aux figures 2 et 3. L'extrèmité 16a est, selon le mode de réalisation représenté, l'extrémité supérieure de la rampe 15. Quand le point d'appui 12a est à l'autre extrémité 16b de la rampe 15, les moyens 3 escamotables sont en position inactive, comme représenté en figure 1. L'extrèmité 16b est l'extrémité inférieure de la rampe 15. Au moins une de ces extrémités 16a, 16b de la rampe 15, comporte les moyens 14 de maintien immobile du point d'appui 12a.

Préférentiellement, comme représenté en figure 4, la rampe 15 de guidage est une plaque plane de forme allongée solidarisée rigidement et de façon inamovible à la structure 2. Elle est pliée à ses extrêmités 16a et 16b. L'extrémité 16a correspondant à la position du point d'appui 12a où les moyens 3 escamotables sont en position active, est pliée sensiblement en forme de demicercle ou de profil de façon à réaliser les moyens 14 de maintien. L'extrémité 16b correspondant à la position du point d'appui 12a où les moyens 3 escamotables sont en position inactive, est pliée le long d'une ligne de pliage selon un angle de pliage approprié, par exemple de 30 degrés environ, de façon à former des moyens 17 de butée interdisant le déplacement du point d'appui 12a au delà de cette extrémité 16b. La rampe 15 comporte de tels moyens 17 de butée à au moins une de ses extrémités 16a, 16b et de préférence aux deux extrémités. Lorsque des moyens 14 de maintien sont prévus, ceux-ci constituent les moyens 17 de butée.

Les moyens 8b de commande inférieurs sont constitués d'au moins un levier 10c dont le point d'appui 12c coïncide avec le point d'appui 12b du second levier 10b des moyens 8a de commande supérieurs. Le point d'appui 12b, 12c est donc commun aux leviers 10b, 10c qui sont associés rigidement par ce point d'appui 12b ou 12c. Ainsi, le déplacement d'un de ces leviers engendre celui de l'autre levier.

Les moyens 3 escamotables sont constitués d'une part de moyens 3" escamotables arrière, notamment constitués d'au moins une roue arrière, de préférence deux roues, située en position inactive sous le châssis 5 de l'établi, en regard de ce châssis 5 et à proximité d'un côté 18 de ce châssis dit côté arrière, l'axe de rotation de cette (ou ces) roue (s) étant parallèle à ce côté 18; et d'autre part de moyens 3' escamotables avant, notamment constitués d'au moins une roue avant, de préférence une seule roue (ou deux roues jumelées) située en position active comme en position inactive en dehors du châssis 5 à proximité de la zone médiane du côté 19 opposé au côté arrière 18, ce côté 19 étant dit côté avant.

La roue avant 3' fait donc saillie par rapport au parallélépipède défini par la stucture 2.

De ce fait, le second levier 10b de commande supérieur ainsi que le levier 10c de commande inférieur, ou l'un seulement de ces leviers, comporte au moins deux points d'action 13'b, 13''b, 13'c, 13''c, un point d'action 13'b, 13'c avant associé mécaniquement aux moyens 9' de transmission avant qui transmettent l'effort de l'utilisateur aux moyens 3' escamotables avant, et un point d'action 13''b, 13''c, arrière associé mécaniquement aux moyens 9'' de transmission arrière qui transmettent l'effort de l'utilisateur aux moyens 3' escamotables arrière. Ainsi, le levier 10b se dédouble dans sa portion comprise entre son point d'appui 12b et ses points d'action 13'b et 13''b en deux parties qui se rejoignent au point d'appui 12b. De même, le levier 10c comporte un point d'action 13'c compris entre son point de manoeuvre 11c et son point d'appui 12c, et un point d'action 13''c tel que le point d'appui 12c est compris entre le point de manoeuvre 11c et le point d'action 13''c. Comme on l'a déjà dit, le point d'appui 12c coincide avec le point d'appui 12b. D'ailleurs, préférentiellement, les points d'action 13'c, 13''c du levier 10c de commande inférieur coïncident avec les points d'action 13'b, 13''b du second levier 10b de commande supérieur. De la sorte, les points 13'b et 13'c ne sont qu'un seul et même point et les points 13''b et 13''c ne sont qu'un seul et même point.

Les moyens 9'' de transmission arrière sont constitués d'au moins une bielle 20 et d'un levier 21. La bielle 20 est associée mécaniquement d'une part au point de manoeuvre 22 du levier 21 et d'autre part au point d'action arrière 13''b, 13''c des moyens 8 de commande. Le point d'action 24 du levier 21 est associé mécaniquement à l'axe de rotation 25 des moyens 3'' escamotables arrière notamment par une liaison du type pivot. Le point d'appui 23 du levier 21 est solidarisé au châssis 5 notamment par une liaison du type pivot. Le levier 21 est donc articulé au châssis 5 par le point d'appui 23.

L'établi 1 selon l'invention comporte avantageusement des moyens 26 de rappel des moyens 3 escamotables en position inactive permettant notamment de décoller et de maintenir décollés du sol les moyens 3 escamotables lorsque l'établi 1 repose sur ses pieds 6. Ces moyens 26 de rappel sont préférentiellement constitués d'un ressort de traction dont une extrémité est solidaire de la structure 2 et dont l'autre extrémité est solidaire des moyens 3'' escamotables arrières ou de leur axe de rotation 25.

Les moyens 9' de transmission avant sont associés au point d'action 13'b, 13'c avant des moyens 8 de commande par une liaison mécanique du type pivot dont l'axe 27 est sensiblement vertical lorsque les moyens 3 escamotables sont en position active totalement déployée. Ces moyens 9' de transmission sont associés aux moyens 3' escamotables avant par une liaison mécanique du type pivot dont l'axe 28 est orthogonal à l'axe 27, c'est à dire sensiblement horizontal. Les moyens 9' de transmission ont une forme telle que les axes 27 et 28 ne sont pas coplanaires, de sorte que les moyens 3' escamotables avant peuvent pivoter autour de l'axe 27 et en particulier prendre deux positions dans lesquelles leur axe de rotation 28 est parallèle à celui 25 des moyens 3'' escamotables arrière. Une de ces positions est une position proche de la structure 2 représentée en figure 2, et l'autre est une position éloignée de la structure 2 représentée en figure 3. L'établi 1 peut être dirigé selon des trajectoires courbes lorsque les moyens 3 sont en position active, grâce à la possibilité de pivotement des moyens 3'. Notamment, pour faciliter ce pivotement, la roue avant 3' est de diamètre assez grand, avantageusement de diamètre supérieur aux roues arrière 3''.

Dans la position proche représentée en figure 2, l'effort de l'utilisateur pour déployer les moyens 3 escamotables doit être moindre que celui nécessaire quand les moyens 3' avant sont en position éloignée. De plus, pendant la manoeuvre de déploiement, si les moyens 3' avant sont dans la position proche représentée en figure 1 et 2, les moyens 3' et 3'' avant et arrière escamotables viennent en contact à peu près simultanément avec le sol, et l'établi se soulève verticalement tout en restant sensiblemnt d'aplomb. Au contraire, si les moyens 3' avant sont dans la position éloignée représentée en figure 3, les moyens 3'' arrière viennent en premier en contact avec le sol et soulèvent l'arrière de l'établi, puis l'avant se soulève lorsque les moyens 3' avant viennent en contact avec le sol.

Les moyens 4 de manoeuvre sont agencés avantageusement de façon que les mouvements des moyens 3', 3'' escamotables avant et arrière se font en sens inverse, pour que les efforts de réaction qu'ils induisent sur l'établi se contrarient lors des manoeuvres d'escamotage et de déploiement qui n'engendrent ainsi aucune translation horizontale intempestive de l'établi.

Lorsque les moyens 3 escamotables sont en position active maintenue par les moyens 14 de maintien, le déplacement de l'établi peut être obtenu en se servant des moyens 8a de commande supérieurs, en particulier du point de manoeuvre 11a, comme d'une poignée pour tracter, pousser ou diriger l'établi.

Les moyens 4 de manoeuvre et/ou les moyens 3 escamotables sont avantageusement sensiblement symétriques par rapport à un plan P vertical médian de la structure 2 (figure 4). Dans ce cas, au moins un des leviers 10a, 10b, 10c est double et est constitué de deux bras de leviers symétriques l'un de l'autre par rapport au plan P et associés rigidement l'un à l'autre de façon inamovible par les points de manoeuvre et/ou par les points d'appui et/ou par les points d'action de ces bras de levier.

Préférentiellement, le premier levier 10a de commande supérieur est double, et la structure 2 comporte deux rampes 15 de guidage des points d'appui 12a des bras de levier constituant ce levier 10a, disposées symétriquement l'une de l'autre par rapport au plan P. Ces rampes 15 sont alors de préférence associées rigidement aux pieds 6 avant de l'établi. Les deux bras de levier constituant le levier 10a sont avantageusement associés entre eux par le point de manoeuvre 11a matérialisé par une barre 29 horizontale de connexion pouvant servir de poignée lorsque l'on déplace l'établi 1.

Les bras de levier formant le levier 10a ont une forme et des dimensions appropriées pour que le levier 10a soit sensiblement horizontal lorsque les moyens 3 sont en position active et le plus vertical possible lorsque les moyens 3 sont en position inactive. En particulier, ils peuvent être coudés à concavité orientée sensiblement vers le haut, sur leur partie comprise entre le point d'action 13a et le point d'appui 12a.

Le second levier 10b est préférentiellement également double comme expliqué ci-dessus, les deux bras de levier le constituant étant associés par le point d'appui 12b matérialisé par une barre horizontale de connexion sur laquelle on associe les moyens 8b de commande inférieurs.

Dans le mode de réalisation préférentiel de l'invention décrit ci-dessus, les moyens 4 de manoeuvre et les moyens 3 escamotables sont situés globalement à l'extérieur du parallélépipède défini par la structure 2 et le châssis 5. Plus précisément, les moyens de transmission arrière 9'' et les moyens 3'' escamotables arrière sont situés sous le châssis 5, et les moyens 3' escamotables avant sont situés globalement à l'extérieur et en regard d'une face verticale de l'établi 1. Ainsi, l'espace intérieur de la structure 2 et l'espace supérieur à la surface 7 de travail sont laissés libres pour une utilisation normale identique à celle que l'on en fait dans les établis fixes connus. L'espace intérieur sert généralement d'espace de rangement, et comporte avantageusement des tiroirs ou autres éléments de rangement

Par exemple un établi selon l'invention peut avoir les dimensions suivantes:

- hauteur comprise entre 850 et 900 mm, notamment de l'ordre de 890 mm.
- profondeur comprise entre 675 et 725 mm, notamment de l'ordre de 700 mm.
- longueur comprise entre 500 mm et 1 500 mm, notamment de l'ordre de 1 000 mm ou de 1 500 mm.
- moyens 8a de commande supérieurs:
  . premier levier 10a de commande supérieur:
  - distance entre point d'appui 12a et point de manoeuvre 11a comprise entre 340 et 400 mm, notamment de l'ordre de 370 mm.
  - distance entre point d'appui 12a et point d'action 13a comprise entre 170 et 230 mm, notamment de l'ordre de 205 mm.
  . second levier 10b de commande supérieur et levier 10c de commande inférieur:

- distance entre point de manoeuvre 11b du second levier 10b et point d'appui 12b, 12c comprise entre 350 et 450 mm, notamment de l'ordre de 400 mm.
- distance entre point de manoeuvre 11c du levier 10c de commande inférieur et point d'appui 12b, 12c comprise entre 100 et 250 mm, notamment de l'ordre de 150 mm.
- distance entre point d'appui 12b, 12c et point d'action avant 13'b, 13'c comprise entre 40 et 110 mm, notamment de l'ordre de 70 mm.
- distance entre point d'appui 12b, 12c et point d'action arrière 13''b, 13''c, comprise entre 100 et 200 mm, notamment de l'ordre de 150 mm.

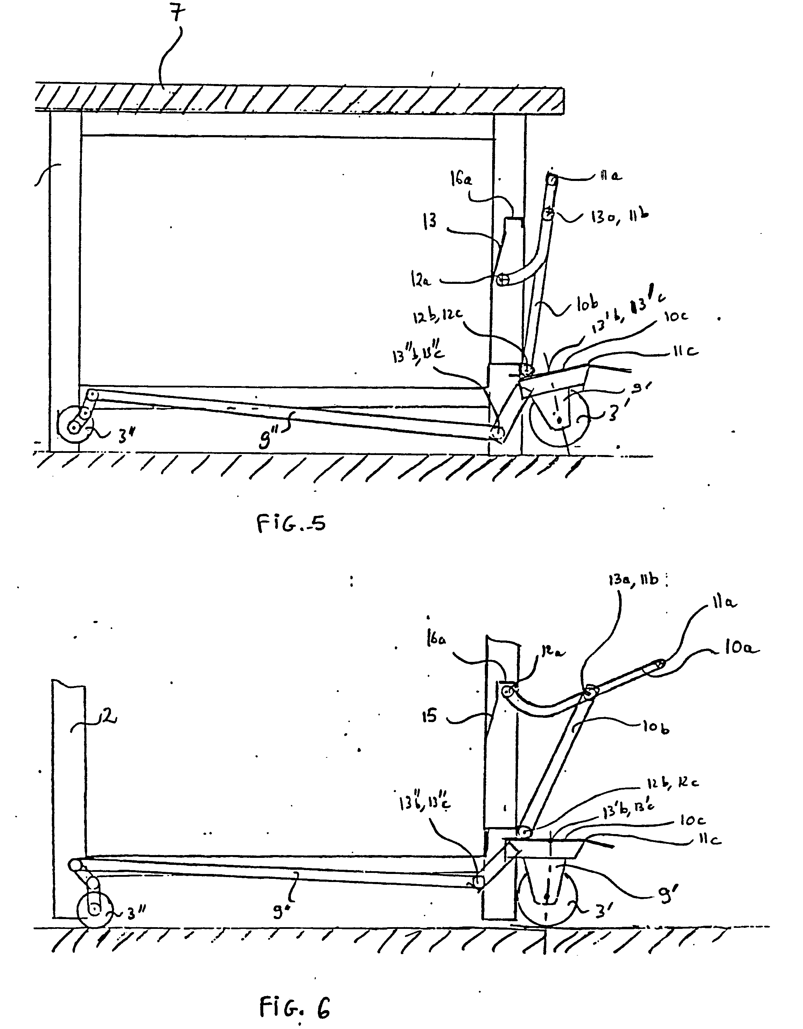

- angle entre le segment point de manoeuvre 12a - point d'action 13a et le segment point d'action 13a - point d'appui 11a du premier levier 10a compris entre 150° et 160°, notamment de l'ordre de 155°; le segment 13a-12a étant courbe (figures 4, 5 et 6).
- angle entre le segment point de manoeuvre 11b - point d'appui 12b et le segment point d'appui 12b - point d'action avant 13'b du second levier 10b compris entre 60° et 90°, notamment de l'ordre de 75°.
- angle entre le segment point de manoeuvre 11b - point d'appui 12b et le segment point d'appui 12b - point d'action arrière 13'b du second levier 10b compris entre 155° et 170°, notamment de l'ordre de 162°.
- angle entre le segment point de manoeuvre 11c - point d'action avant 13'c - point d'appui 12c et le segment point d'appui 12c - point d'action arrière 13''c du levier inférieur 10c compris entre 105° et 135°, notamment de l'ordre de 120°.
- inclinaison de la rampe 15 par rapport à la verticale comprise entre 15° et 45° notamment de l'ordre de 30°.

Un tel établi peut supporter une charge de poids voisin de 500 kg tout en restant manoeuvrable dans de bonnes conditions et avec facilité.

De nombreuses variantes de l'invention sont possibles et évidentes à l'homme de l'art qui adoptera les dimensions et la cinématique des moyens 4 de manoeuvre en fonction de la taille et de l'utilisation que l'on veut faire de l'établi 1.

**Revendications**

1. Etabli du type comportant une structure (2) rigide et indéformable, des moyens (3) escamotables solidaires de la structure (2) et qui permettent le déplacement horizontalement et le soutien stable de l'établi pendant son déplacement, et des moyens (4) de manoeuvre exclusivement mécaniques permettant de manoeuvrer les moyens (3) escamotables dans le sens du déploiement, respectivement dans celui de l'escamotage, et de les mettre en position active, respectivement inactive, caractérise en ce que les moyens (4) mécaniques de manoeuvre comportent d'une part des moyens (8a) de commande supérieurs constitués d'un premier levier (10a) comportant un point de manoeuvre (11a) sur lequel l'utilisateur peut exercer un effort manuel, un point d'appui (12a) solidaire de la structure (2) et un point d'action (13a) sur un second levier (10b), dont le point de manoeuvre (11b) coïncide avec ce point d'action (13a) du premier levier (10a), dont le point d'appui (12b) est solidaire de la structure (2), et qui comporte au moins un point d'action (13'b, 13''b) associé aux moyens (3) escamotables par l'intermédiaire de moyens (9) de transmission, et d'autre part des moyens (8b) de commande inférieurs constitués d'au moins un levier (10c) associé rigidement au second levier (10b) des moyens (8a) de commande superieurs par leur point d'action commun (12b, 12c) , et qui comporte un point de manoeuvre (11c) sur lequel l'utilisateur peut exercer un effort normalement avec un de ses pieds, et au moins un point d'action (13'c, 13''c) associé aux moyens escamotables (3) par l'intermédiaire de moyens (9) de transmission, de façon que l'utilisateur puisse doser les efforts à exercer sur chacun des moyens (8a, 8b) de commande.

2. Etabli selon la revendication 1, caractérisé en ce que les moyens (4) de manoeuvre sont agencés de telle façon qu'au moins au début de chaque manoeuvre de déploiement et/ou d'escamotage, l'effort manuel sur les moyens (8a) de commande supérieurs est un effort de traction, tandis que l'effort avec le pied sur les moyen (8b) de commande inférieurs est un effort de poussée, les moyens (8b) de commande inférieurs - respectivement les moyens (8a) de commande supérieurs - servant d'appui à l'utilisateur pour exercer l'effort manuel, respectivement l'effort avec le pied.

3. Etabli selon l'une quelconque des revendications 1 et 2, caractérisé en ce qu'un des points d'appui (12a, 12b) notamment le point d'appui (12a) du premier levier (10a) est associé au moins lors des manoeuvres d'escamotage et de déploiement de façon mobile à la structure (2) notamment par une liaison de contact surfacique ou linéique et en ce que l'autre point d'appui (12a, 12b) notamment le point d'appui (12b) du second levier (10b) est associé de façon immobile et solidarisé à la structure (2) notamment par une liaison du type pivot.

4. Etabli selon l'une quelconque des revendications 1 à 3, caractérisé en ce que le point d'action (13a) est situé entre le point de manoeuvre (11a) et le point d'appui (12a) du premier levier (10a).

5. Etabli selon l'une quelconque des revendications 1 à 4, caractérisé en ce que le point d'appui (12b) est situé entre le point d'action (13b) et le point de manoeuvre (11b) du second levier (10b).

6. Etabli selon l'une quelconque des revendications 1 à 5, caractérisé en ce que le point d'appui (12a) du premier levier (10a) est associé de façon mobile par contact surfacique ou linéique à la structure (2) et en ce que la structure (2) comporte des moyens (14) de maintien immobile du point d'appui (12a) actionnés automatiquement lorsque ce point d'appui (12a) et les moyens (4) de manoeuvre sont dans une position donnée par rapport à la structure (2), notamment celle correspondant à la position active et/ou celle correspondant à la position inactive des moyens (3) escamotables, de sorte que les deux leviers (10a, 10b) de commande supérieurs associés rigidement et de façon immobile à la structure (2) par leur point d'appui (12a, 12b) et articulés l'un à l'autre, constituent un ensemble indéformable rigide maintenant les moyens (3) escamotables en position active et/ou inactive en empêchant un escamotage et/ou un déploiement intempestif des moyens (3) escamotables, notamment sous l'effet du poids de l'établi (1) et de sa charge.

7. Etabli selon l'une quelconque des revendications 1 à 6, caractérisé en ce que le point d'appui (12a) du premier levier (10a) de commande supérieur est associé à la structure (2) par contact mobile avec une rampe (15) de guidage rigidement solidaire de la structure (2), ce point d'appui (12a) pouvant se déplacer le long de cette rampe (15) au cours des manoeuvres d'escamotage et de déploiement.

8. Etabli selon l'une quelconque des revendications 1 à 7, caractérisé en ce qu'au moins une des extrémités (16a, 16b) de la rampe (15) de guidage comporte les moyens (14) de maintien immobile de ce point d'appui (12a).

9. Etabli selon l'une quelconque des revendications 1 à 8, caractérisé en ce que la rampe (15) comporte à au moins une de ses extrémités (16a, 16b) notamment et de préférence à l'extrémité (16b) correspondant à la position inactive des moyens (3) escamotables, des moyens (17) de butée du point d'appui (12a), interdisant le déplacement de ce point d'appui au delà de cette extrémité.

10. Etabli selon l'une quelconque des revendications 1 à 9, dans lequel les moyens (3) escamotables sont constitués d'une part de moyens (3'') escamotables arrière, notamment constitués d'au moins une roue arrière située en position active comme en position inactive sous le châssis (5) de l'établi, en regard de ce châssis (5) et à proximité d'un côté (18) de ce châssis, et dont l'axe de rotation (25) est parallèle à ce côté, et d'autre part, de moyens (3') escamotables avant, notamment constitués d'au moins une roue avant située en position active comme en position inactive en dehors du châssis (5) à proximité de la zone médiane du côté (19) opposé au côté (18), caractérisé en ce que le second levier (10b) de commande supérieur ainsi que le levier (10c) de commande inférieur ou l'un seulement de ces leviers, comporte au moins deux points d'action (13'b, 13''b, 13'c, 13''c) un point d'action avant (13'b, 13'c) associé mécaniquement aux moyens (9') de transmission avant qui transmettent l'effort de l'utilisateur aux moyens (3') escamotables avant, et un point d'action arrière (13''b, 13''c) associé mécaniquement aux moyens (9'') de transmission arrière qui transmettent l'effort de l'utilisateur aux moyens (3') escamotables arrière.

11. Etabli selon la revendication 10, caractérisé en ce que les points d'action (13'c, 13''c) du levier (10c) de commande inférieur coïncident avec les points d'action (13'b, 13''b) du second levier (10b) de commande supérieur.

12. Etabli selon l'une quelconque des revendications 1 à 11, caractérisé en ce que les moyens (9'') de transmission arrière sont constitués au moins d'une bielle (20) et d'un levier (21), la bielle (20) étant associée mécaniquement d'une part au point de manoeuvre (22) du levier (21) et d'autre part, au point d'action arrière (13''b, 13''c) des moyens (8) de commande, le point d'action (24) du levier (21) étant associé mecaniquement à l'axe de rotation (25) des moyens (3'') escamotable arrière, le point d'appui (23) étant solidarisé au châssis (5) notamment par une liaison du type pivot.

13. Etabli selon l'une quelconque des revendications 1 à 12, caractérisé en ce qu'il comporte des moyens (26) de rappel des moyens (3) escamotables en position inactive permettant notamment de décoller et de maintenir décollés du sol les moyens (3) escamotables lorsque l'établi (1) repose sur'ses pieds (6).

14. Etabli selon l'une quelconque des revendications 1 à 13, caractérisé en ce que les moyens (9') de transmission avant sont associés au point d'action (13'b, 13'c) avant des moyens (8) de commande par une liaison mécanique du type pivot dont l'axe (27) est sensiblement vertical lorsque les moyens (3) escamotables sont en position active totalement déployée, et sont associés aux moyens (3') escamotables avant par une liaison mécanique du type pivot dont l'axe (28) est orthogonal à l'axe (27), les deux axes (27, 28) étant non coplanaires, de sorte que les moyens (3') escamotables avant peuvent prendre deux positions dans lesquelles leur axe de rotation (28) est parallèle à celui (25) des moyens (3'') escamotables arrière, une position proche de la structure (2) et une position plus éloignée de la structure (2).

15. Etabli selon l'une quelconque des revendications 1 à 14, caractérisé en ce que les moyens (4) de manoeuvre sont agencés de façon que les mouvements des moyens (3', 3'') escamotables avant et arrière se font en sens inverse, pour que les effets de réaction qu'ils induisent sur l'établi se contrarient lors des manoeuvres d'escamotage et de déploiement, et n'engendrent ainsi aucune translation horizontale intempestive de l'établi (1).

16. Etabli selon l'une quelconque des revendications 1 à 15, caractérisé en ce qu'au moins un des leviers (10a, 10b, 10c, 21) est double et est constitué de deux bras de leviers symétriques l'un de l'autre par rapport au plan P vercial médian et associés rigidement l'un à l'autre de façon inamovible par les points de manoeuvre (11a, 11b, 11c, 22) et/ou par les points d'appui (12a, 12b, 12c, 23) et/ou par les points d'action (13a, 13b, 13c, 24) de ces leviers.

17. Etabli selon l'une quelconque des revendications 1 à 16, caractérisé en ce que le premier levier (10) de commande supérieur est double selon la revendication 16 et en ce que la structure (2) comporte deux rampes (15) de guidage des points d'appui (12a) du premier levier (10a), disposées en symétrie l'un de l'autre par rapport au plan P.

**Patentansprüche**

1. Werkbank, mit einem starren und formstabilen Aufbau (2), mit einziehbaren Mitteln (3), die mit dem Aufbau (2) verbunden sind und die eine horizontale Bewegung und eine stabile Stütze der Werkbank während deren Bewegung ermöglichen, und mit rein mechanischen Betätigungsmitteln, mit denen die einziehbaren Mittel (3) in Ausfahr- bzw. Einziehrichtung betätigbar und diese Mittel in eine aktive bzw. inaktive Position bringbar sind, dadurch gekennzeichnet, daß die mechanischen Betätigungsmittel (4) einerseits obere Bedienungsmittel, die einen ersten Hebel (10a) aufweisen, der eine Betätigungsstelle (11a), auf die der Benutzer eine manuelle Kraft ausüben kann, eine mit dem Aufbau (2) fest verbundene Lagerstelle (12a) und eine Aktionsstelle (13a) auf einen zweiten Hebel (10b) aufweist, dessen Betätigungsstelle (11b) mit dieser Aktionsstelle (13a) des ersten Hebels (10a) übereinstimmt und dessen Lagerstelle (12b) fest mit dem Aufbau (2) verbunden ist und der mindestens eine Aktionsstelle (13'b, 13''b) besitzt, die durch Zwischenfügen von Übertragungsmitteln (9) mit den einzielbaren Mitteln (3) verbunden ist, und andererseits untere Bedienungsmittel (8b) besitzen, die mindestens einen Hebel (10c) aufweisen, der mit dem zweiten Hebel (10b) der oberen Bedienungsmittel (8a) durch deren gemeinsame Aktionsstelle (12b, 12c) verbunden ist und der eine Betätigungsstelle (11c), auf die der Benutzer normalerweise mit einem seiner Füsse eine Kraft ausüben kann, und mindestens eine Aktionsstelle (13'c, 13''c) aufweist, die mit den einziehbaren Mitteln (3) durch Zwischenfügen von Übertragungsmittel (9) derart verbunden ist, daß der Benutzer die auf jedes der Bedienungsmittel (8a, 8b) auszuübenden Kräfte aufteilen kann.

2. Werkbank nach Anspruch 1, dadurch gekennzeichnet, daß die Betätigungsmittel (4) derart gestaltet sind, daß zumindest zu Beginn jeder Ausfahr- und/oder Einziehbetätigung die manuelle Kraft auf die oberen Bedienungsmittel (8a) eine Zugkraft ist, während die Kraft mit dem Fuß auf die unteren Bedienungsmittel (8b) eine Stoßkraft ist wobei die unteren Bedienungsmittel (8b) bzw. die oberen Bedienungsmittel (8a) dem Benutzer zum Ausüben der manuellen Kraft bzw. der Kraft mit dem Fuß als Stütze dienen.

3. Werkbank nach einem der Ansprüche 1 und 2, dadurch gekennzeichnet, daß eine der Lagerstellen (12a, 12b), insbesondere die Lagerstelle (12a) des ersten Hebels (10a) zumindest bei der Einzieh- und der Ausfahrbetätigung in beweglicher Weise mit dem Aufbau (2) insbesondere durch eine Oberflächen- oder Linienberührungsverbindung verbunden ist, und daß die andere Lagerstelle (12a, 12b), insbesondere die Lagerstelle (12b) des zweiten Hebels (10b) unbeweglich und fest mit dem Aufbau (2) insbesondere durch eine Schwenkverbindung verbunden ist.

4. Werkbank nach einem der Ansprüche 1 bis 3, dadurch gekennzeichnet, daß die Aktionsstelle (13a) zwischen der Betätigungsstelle (11a) und der Lagerstelle (12a) des ersten Hebels (10a) angeordnet ist.

5. Werkbank nach einem der Ansprüche 1 bis 4, dadurch gekennzeichnet, daß die Lagerstelle (12b) zwischen der Aktionsstelle (13b) und der Betätigungsstelle (11b) des zweiten Hebels (10b) angeordnet ist.

6. Werkbank nach einem der Ansurüche 1 bis 5, dadurch gekennzeichnet, daß die Lagerstelle (12a) des ersten Hebels (10a) in beweglicher Weise durch Oberflächen- oder Linienberührung mit dem Aufbau (2) verbunden ist und daß der Aufbau (2) Mittel (14) zum unbeweglichen Halten der Lagerstelle (12a) besitzt, welche automatisch betätigt sind, wenn diese Lagerstelle (12a) und die Betätigungsmittel (4) in einer bzgl. des Aufbaus (2) gegebenen Position sind, insbesondere in derjenigen, die der aktiven Position und/oder in derjenigen, die der inaktiven Position der einziehbaren Mittel (3) entspricht, so daß die zwei oberen Bedienungshebel (10a, 10b) starr und unbeweglich mit dem Aufbau (2) über ihre Lagerstelle (12a, 12b) und miteinander gelenkig verbunden sind, wobei sie eine formstabile, starre Einheit bilden, die die einziehbaren Mittel (3) in aktiver und/oder inaktiver Position halten, indem sie ein unbeabsichtigtes Einziehen und/oder Ausfahren der einziehbaren Mittel (3), insbesondere unter der Wirkung des Gewichtes der Werkbank (1) und deren Last verhindern.

7. Werkbank nach einem der Ansprüche 1 bis 6, dadurch gekennzeichnet, daß die Lagerstelle (12a) des ersten oberen Bedienungshebels (10a) mit dem Aufbau (2) durch beweglichen Kontakt mit einer starren, mit dem Aufbau (2) verbundenen Führungsrampe (15) verbunden ist, wobei diese Lagerstelle (12a) längs dieser Rampe (15) im Verlauf der Einzieht und der Ausfahrbetätigung verschiebbar ist.

8. Werkbank nach einem der Ansprüche 1 bis 7, dadurch gekennzeichnet, daß zumindest eines der Enden (16a, 16b) der Führungsrampe (15) die Mittel (14) zum unbeweglichen Halten dieser Lagerstelle (12a) besitzt.

9. Werkbank nach einem der Ansprüche 1 bis 8, dadurch gekennzeichnet, daß die Rampe (15) zumindest an einem seiner Enden (16a, 16b), insbesondere und vorzugsweise an dem Ende (16b), das der inaktiven Position der einziehbaren Mittel (3) entspricht, Anschlagmittel (17) für die Lagerstelle (12a) besitzt, die das Verschieben dieser Lagerstelle gegenüber diesem Ende verhindern.

10. Werkbank nach einem der Ansprüche 1 bis 9, bei der die einziehbaren Mittel (3) einerseits hintere einziehbare Mittel (3''), die insbesondere aus zumindest einem hinteren Rad gebildet sind, das in aktiver Position wie in inaktiver Position unter dem Unterbau (5) der Werkbank bzgl. dieses Unterbaus (5) und in der Nähe einer Seite (18) dieses Unterbaus angeordnet ist und dessen Drehachse (25) parallel zu dieser Seite ist, und andererseits vordere einziehbare Mittel (3') besitzen, die insbesondere aus zumindest einem Rad gebildet sind, das in aktiver Position wie in inaktiver Position außerhalb des Unterbaus (5) in der Nähe des mittleren Bereichs der der Seite (18) gegenüberliegenden Seite angeordnet ist, dadurch gekennzeichnet, daß der zweite obere Bedienungshebel (10b) ebenso wie der untere Bedienungshebel (10c) oder nur einer dieser Hebel zumindest zwei Aktionsstellen (13''b, 13'c, 13''c) besitzt, von denen eine vordere Aktionsstelle (13'b, 13'c) mechanisch mit vorderen Übertragungsmitteln (9') verbunden ist, die die Kraft des Benutzers auf die vorderen einziehbaren Mittel (3') Übertragen, und eine hintere Aktionsstelle (13''b, 13'c) mechanisch mit hinteren Übertragungsmitteln (9'') verbunden ist, die die Kraft des Benutzers auf die hinteren einziehbaren Mittel (3') Übertragen.

11. Werkbank nach Anspruch 10, dadurch gekennzeichnet, daß die Aktionsstellen (13'c, 13''c) des unteren Bedienungshebels (10c) mit den Aktionsstellen (13'b, 13''b) des zweiten oberen Bedienungshebels (10b) zusammenfallen.

12. Werkbank nach einem der Ansprüche 1 bis 11, dadurch gekennzeichnet, daß die hinteren Übertragungsmittel (9'') zumindest eine Koppel stange (20) und einen Hebel (21) besitzen, von denen die Koppel stange (20) mechanisch einerseits mit einer Betätigungsstelle (22) des Hebels (21) und andererseits mit einer hinteren Aktionsstelle (13''b, 13'c) der Bedienungsmittel (8) verbunden ist, wobei die Aktionsstelle (24) des Hebels (21) mechanisch mit der Rotationsachse (25) der hinteren einziehbaren Mittel (3'') verbunden ist und wobei die Lagerstelle (23) mit dem Unterbau (5), insbesondere durch eine Schwenkverbindung verbunden ist.

13. Werkbank nach einem der Ansprüche 1 bis 12, dadurch gekennzeichnet, daß sie Rückstellmittel (26) für die inaktive Position der einziehbaren Mittel (3) besitzt, mit denen die einziehbaren Mittel (3) vom Boden anhebbar und in der angehobenen Position haltbar sind, wenn die Werkbank (1) auf ihren Füßen (6) ruht.

14. Werkbank nach einem der Ansprüche 1 bis 13, dadurch gekennzeichnet, daß die vorderen Übertraqungsmittel (9') mit der vorderen Aktionsstelle (13'b, 13'c) der Bedienungsmittel (8) durch eine mechanische Schwenkverbindung verbunden sind, deren Achse (27) im wesentlichen vertikal ist, wenn die einziehbaren Mittel (3) in inaktiver, insgesamt ausgefahrener Position sind, und mit den vorderen einziehbaren Mitteln (3') durch eine mechanische Schwenkverbindung verbunden sind, deren Achse (28) senkrecht zur Achse (27) ist, wobei die beiden Achsen (27, 28) nicht in einer Ebene sind, so daß die vorderen einziehbaren Mittel (3') zwei Positionen einnehmen können, in denen ihre Rotationsachse (28) parallel zu derjenigen (25) der hinteren einziehbaren Mittel (3'') ist, nämlich in einer dem Aufbau (2) nahen Position und in einer vom Aufbau (2) weiter entfernten Position.

15. Werkbank nach einem der Ansprüche 1 bis 14, dadurch gekennzeichnet, daß die Betätigungsmittel (4) derart gestaltet sind, daß die Bewegungen der vorderen und hinteren einziehbaren Mittel (3', 3'') entgegengerichtet sind, damit die Reaktionswirkungen, die auf die Werkbank einwirken, bei der Einzieh- und Ausfahrbetätigung entgegengesetzt sind und so keine unbeabsichtigte horizontale Verschiebung der Werkbank (1) hervorbringen.

16. Werkbank nach einem der Ansprüche 1 bis 15, dadurch gekennzeichnet, daß zumindest einer der Hebel (10a, 10b, 10c, 21) doppelt ist und mit zwei bzgl. einer mittleren vertikalen Ebene P zueinander symmetrischen Hebelarme versehen ist, die starr und durch die Betätigungsstellen (11a, 11b, 11c, 22) und/oder durch die Lagerstellen (12a, 12b, 12c, 23) und/oder durch die Aktionsstellen (13a, 13b, 13c, 24) dieser Hebel unbeweglich miteinander verbunden sind.

17. Werkbank nach einem der Ansprüche 1 bis 16, dadurch gekennzeichnet, daß der erste obere Bedienungshebel (10) gemäß dem Anspruch 16 doppelt ausgeführt ist und daß der Aufbau (2) für die Lagerstellen (12a) des ersten Hebels (10a) zwei Führungsrampen (15) besitzt, welche bzgl. der Ebene P symmetrisch zueinander angeordnet sind.

## Claims

1. Workbench of the type having a rigid and non-deformable structure (2), retractable means (3) which are secured to the structure (2) and which enable the workbench to be displaced horizontally and kept stable during displacement, and exclusively mechanical manoeuvring means (4) which enable the retractable means (3) to be manoeuvred in the direction of extension and that of retraction respectively and to put them in the active and inactive positions respectively, characterized in that the mechanical manoeuvring means (4) have, on the one hand, upper control means (8a) comprising a first lever (10a) which has a point (11a) of manoeuvring on which the user can exert a manual force, a bearing point (12a) which is secured to the structure (2) and a point (13a) of action on a second lever (10b), whereof the point (11b) of manoeuvring coincides with this point (13a) of action on the first lever (10a), whereof the bearing point (12b) is secured to the structure (2), and which second lever (10b) has at least one point (13'b, 13''b) of action associated with the retractable means (3) by means of transmission means (9), and, on the other hand, lower control means (8b) comprising at least one lever (10c) which is rigidly associated with the second lever (10b) of the upper control means (8a) by their common point (12b, 12c) of action, and which lever (10c) has a point (11c) of manoeuvring on which the user can exert a force, usually with one of his feet, and at least one point (13'c, 13''c) of action associated with the retractable means (3) by means of transmission means (9), in such a manner that the user can measure out the forces to be exerted on each of the control means (8a, 8b).

2. Workbench according to claim 1, characterized in that the means (4) of manoeuvring are arranged such that, at least at the start of each extension and/or retraction manoeuvre, the manual force on the upper control means (8a) is a pulling force, while the force with the foot on the lower control means (8b) is a pushing force, the lower control means (8b) and the upper control means (8a) respectively serving as a support for the user for exerting the manual force and the force with the foot respectively.

3. Workbench according to either of claims 1 and 2, characterized in that one of the bearing points (12a, 12b), in particular the bearing point (12a) of the first lever (10a), is associated, at least during the retraction and extension manoeuvres, in movable manner with the structure (2), in particular by means of a surface or linear contact connection, and in that the other bearing point (12a, 12b), in particular the bearing point (12b) of the second lever (10b), is associated in non-movable manner and secured to the structure (2), in particular by means of a connection of the pivot type.

4. Workbench according to any one of claims 1 to 3, characterized in that the point (13a) of action is located between the point (11a) of manoeuvring and the bearing point (12a) of the first lever (10a).

5. Workbench according to any one of claims 1 to 4, characterized in that the bearing point (12b) is located between the point (13b) of action and the point (11b) of manoeuvring of the second lever (10b).

6. Workbench according to any one of claims 1 to 5, characterized in that the bearing point (12a) of the first lever (10a) is associated in movable manner by surface or linear contact with the structure (2), and in that the structure (2) has means (14) for holding the bearing point (12a) immobile which are actuated automatically when this bearing point (12a) and the means (4) of manoeuvring are in a given position with respect to the structure (2), in particular that corresponding to the active position and/or that corresponding to the inactive position of the retractable means (3), so that the two upper control levers (10a, 10b) associated rigidly and in non-movable manner with the structure (2) by means of their bearing point (12a, 12b) and articulated to one another comprise a non-deformable rigid assembly keeping the retractable means (3) in the active and/or inactive position, preventing an untimely retraction and/or extension of the retractable means (3), in particular under the effect of the weight of the workbench (1) and its load.

7. Workbench according to any one of claims 1 to 6, characterized in that the bearing point (12a) of the first upper control lever (10a) is associated with the structure (2) by movable contact with a guiding ramp (15) which is rigidly secured to the structure (2), it being possible for this bearing point (12a) to be displaced along this ramp (15) in the course of the retraction and withdrawal manoeuvres.

8. Workbench according to any one of claims 1 to 7, characterized in that at least one of the ends (16a, 16b) of the guiding ramp (15) has the means (14) of holding this bearing point (12a) immobile.

9. Workbench according to any one of claims 1 to 8, characterized in that the ramp (15) has, at at least one of its ends (16a, 16b), in particular and preferably at the end (16b) corresponding to the inactive position of the retractable means (3), means (17) for stopping the bearing point (12a), preventing the displacement of this bearing point beyond this end.

10. Workbench according to any one of claims 1 to 9, in which the retractable means (3) comprise, on the one hand, rear retractable means (3''), in particular comprising at least one rear wheel located in the active position and in the inactive position below the frame (5) of the workbench, opposite this frame (5) and in the vicinity of one side (18) of this frame, and whereof the axis (25) of rotation is parallel to this side, and, on the other hand, front retractable means (3'), in particular comprising at least one front wheel located in the active position and in the inactive position outside the frame (5) in the vicinity of the central region of the side (19) opposite the side (18), characterized in that the second upper control lever (10b) and the lower control lever (10c) or only one of these levers has at least two points (13'b, 13''b, 13'c, 13''c) of action, one front point (13'b, 13'c) of action mechanically associated with the front transmission means (9') which transmit the force from the user to the front retractable means (3'), and a rear point (13''b, 13''c) of action mechanically associated with the rear transmission means (9'') which transmit the force from the user to the rear retractable means (3').

11. Workbench according to claim 10, characterized in that the points (13'c, 13''c) of action of the lower control lever (10c) coincide with the points (13'b, 13''b) of action of the second upper control lever (10b).

12. Workbench according to any one of claims 1 to 11, characterized in that the rear transmission means (9'') comprise at least one connecting rod (20) and a lever (21), the connecting rod (20) being mechanically associated, on the one hand, with the point (22) of manoeuvre of the lever (21) and, on the other hand, with the rear point (13''b, 13''c) of action of the control means (8), the point (24) of action of the lever (21) being mechanically associated with the axis (25) of rotation of the rear retractable means (3''), the bearing point (23) being secured to the frame (5), in particular by a connection of the pivot type.

13. Workbench according to any one of claims 1 to 12, characterized in that it has means (26) for returning the retractable means (3) into the inactive position, in particular enabling the retractable means (3) to be detached and to be kept detached from the ground when the workbench (1) rests on its feet (6).

14. Workbench according to any one of claims 1 to 13, characterized in that the front transmission means (9') are associated with the front point (13'b, 13'c) of action of the control means (8) by means of a mechanical connection of the pivot type whereof the axis (27) is substantially vertical when the retractable means (3) are in the completely extended active position and are associated with the front retractable means (3') by means of a mechanical connection of the pivot type whereof the axis (28) is at right angles to the axis (27), the two axes (27, 28) not being coplanar, so that the front retractable means (3') can take up two positions in which their axis (28) of rotation is parallel to that (25) of the rear retractable means (3''), a position close to the structure (2) and a position further away from the structure (2).

15. Workbench according to any one of claims 1 to 14, characterized in that the means (4) of manoeuvring are arranged such that the movements of the front and rear retractable means (3', 3'') are in opposite directions, in order that the reaction effects which they provoke in the workbench oppose one another during the retraction and extension manoeuvres and thus do not cause any untimely horizontal shift of the workbench (1).

16. Workbench according to any one of claims 1 to 15, characterized in that at least one of the levers (10a, 10b, 10c, 21) is double and is constituted by two lever arms which are symmetrical to one another with respect to the central vertical plane P and are rigidly associated with one another in non-movable manner by the points (11a, 11b, 11c, 22) of manoeuvre and/or by the bearing points (12a, 12b, 12c, 23) and/or by the points (13a, 13b, 13c, 24) of action of these levers.

17. Workbench according to any one of claims 1 to 16, characterized in that the first upper control lever (10) is double in accordance with claim 16, and in that the structure (2) has two ramps (15) for guiding the bearing points (12a) of the first lever (10a), these ramps (15) being arranged symmetrically to one another with respect to the plane P.

FIG.1

FIG.2

FIG.4

FIG.3

FIG.5

FIG. 6

5